# EUROPEAN PATENT APPLICATION

(11) **EP 4 354 842 A1**
(43) Date of publication of application: **17.04.2024**
(21) Application number: 22845250.4
(22) Date of filing: 15.07.2022

(54) **CAMERA MODULE AND ELECTRONIC DEVICE**

(30) Priority: 23.07.2021 CN 202110838139
(71) Applicant: Huawei Technologies Co., Ltd., Longgang Shenzhen, Guangdong 518129 (CN)
(72) Inventor: ZHANG, Zhijia, Shenzhen, Guangdong 518129 (CN)
(74) Representative: Pfenning, Meinig & Partner mbB
(86) International application number: PCT/CN2022/106131
(87) International publication number: WO 2023/001085

(57) **Abstract**

Embodiments of this application provide a camera module and an electronic device. The camera module includes a first lens assembly, a light redirecting assembly, and an image sensor. The light redirecting assembly is opposite to the first lens assembly and the image sensor. The camera module further includes a second lens assembly. The second lens assembly moves to an optical path between the first lens assembly and the image sensor or moves outside the optical path when driven by a first driving assembly. When the second lens assembly is located on the optical path (in a first state), a focal length of the camera module is related to focal lengths of the first lens assembly and the second lens assembly. When the second lens assembly is located outside the optical path (in a second state), a focal length of the camera module is related to a focal length of the first lens assembly. In this way, the camera module has different focal lengths in different states, so that the camera module can switch between at least two different focal lengths to implement zooming. In other words, different image shooting functions are implemented by using one camera module, thereby effectively reducing occupied space of the camera module.

## Description

This application claims priority to Chinese Patent Application No. 202110838139.3, filed with the China National Intellectual Property Administration on July 23, 2021 and entitled "CAMERA MODULE AND ELECTRONIC DEVICE", which is incorporated herein by reference in its entirety.

### TECHNICAL FIELD

This application relates to the field of terminal technologies, and in particular, to a camera module and an electronic device.

### BACKGROUND

With development of mobile phone camera technologies, a photographing effect and a requirement of a consumer electronic product like a mobile phone, a tablet computer, a notebook computer, or a wearable camera are increasingly aligned with those of a single-lens reflex camera, and an effect of an image shooting function has gradually become an important feature of a terminal electronic device and one of main indicators for evaluating performance of the terminal electronic device.

Currently, the mobile phone is used as an example. To meet a plurality of image shooting functions, a plurality of camera modules are usually disposed in both a front-facing camera of the mobile phone and a rear-facing camera of the mobile phone, and the plurality of camera modules are arranged on a housing in an array form. Each camera module usually includes a lens assembly, a driving part, and an image sensor. A light ray passes through the lens assembly and then illuminates the image sensor, to implement image capturing and image shooting. The driving part may drive the lens assembly to move relative to the image sensor, to implement a focusing function of the camera module. Physical attributes (for example, focal lengths and apertures of lens assemblies) of the plurality of camera modules may be different, and a zoom function may be implemented by using different camera modules, to meet a plurality of image shooting requirements.

However, disposing of a plurality of cameras occupies large space, limits an internal layout of the electronic device, and is not conducive to development of the image shooting function of the electronic device.

### SUMMARY

This application provides a camera module and an electronic device, to resolve a problem that large space occupied by a plurality of cameras in an existing electronic device limits an internal layout of the electronic device and is not conducive to development of an image shooting function of the electronic device.

A first aspect of this application provides a camera module, including a first lens assembly, a light redirecting assembly, and an image sensor.

A light incidence side of the light redirecting assembly is opposite to the first lens assembly, a light emergence side of the light redirecting assembly is opposite to the image sensor, and the light redirecting assembly is configured to redirect, to illuminate the image sensor, a light ray that enters the camera module through the first lens assembly.

The camera module further includes at least one second lens assembly and a first driving assembly. The second lens assembly moves to an optical path between the first lens assembly and the image sensor or moves outside the optical path when driven by the first driving assembly. When the second lens assembly moves to the optical path between the first lens assembly and the image sensor, that is, when the camera module is in a first state, the light ray passing through the first lens assembly illuminates the second lens assembly, and after passing through the second lens assembly, the light ray is redirected by the light redirecting assembly to illuminate the image sensor, to perform imaging on the image sensor. In this way, an imaging focal length of the camera module is related to a focal length of the first lens assembly and a focal length of the second lens assembly.

When the second lens assembly is located outside the optical path of the first lens assembly and the image sensor, that is, when the camera module is in a second state, the light ray passing through the first lens assembly illuminates the light redirecting assembly, and is redirected by the light redirecting assembly to illuminate the image sensor, to perform imaging on the image sensor. In this way, an imaging focal length of the camera module is related to a focal length of the first lens assembly.

In this way, when in the two states, to be specific, the second lens assembly is driven to be located on the optical path between the first lens assembly and the image sensor and located outside the optical path, the camera module has different focal lengths. In other words, the camera module has different focal lengths when the camera module is in the first state and the second state. Therefore, the camera module may switch between at least two different focal lengths, to implement switching between different image shooting functions. In other words, different image shooting functions can be implemented by using one camera module, so that space occupied by the camera module can be effectively reduced while a requirement of a plurality of image shooting functions is met.

In a possible implementation, the light redirecting assembly and the first lens assembly are distributed in a first direction, and the first direction is parallel to an optical axis of the first lens assembly.

The image sensor and the light redirecting assembly are distributed in a second direction, and the second direction is perpendicular to the first direction. In this way, the optical path is divided into a part that is propagated along the first direction and a part that is propagated along the second direction, to reduce a thickness of the camera module in the first direction. To meet an image shooting requirement, the first direction may be a thickness direction of an electronic device, and the second direction may be a width direction of the electronic device. Reduction of thickness space of the camera module in the first direction helps implement a light and thin design of the electronic device.

In a possible implementation, the first lens assembly, the second lens assembly, and the light redirecting assembly are distributed in the first direction, the first driving assembly and the second lens assembly are distributed in the second direction, and the second lens assembly moves to a position between the first lens assembly and the light redirecting assembly when driven by the first driving assembly. Therefore, the second lens assembly may be located on the optical path between the first lens assembly and the image sensor or located outside the optical path.

In a possible implementation, the first driving assembly includes a guide rail and a sliding part, the second lens assembly is disposed on the sliding part, the guide rail extends along the second direction, and the sliding part moves along the guide rail. The movement of the sliding part drives the second lens assembly to move along the second direction, so that the second lens assembly moves to a position between the first lens assembly and the light redirecting assembly, in other words, is located on an optical path between the first lens assembly and the light redirecting assembly, or moves outside the optical path between the first lens assembly and the light redirecting assembly. Therefore, focal length switching of the camera module is implemented, that is, a focusing function of the camera module is implemented.

In a possible implementation, the first driving assembly includes a rotating part, the second lens assembly is disposed on the rotating part, and the rotating part is disposed to rotate around the first direction. The rotation of the rotating part drives the second lens assembly to rotate around the first direction, so that the second lens assembly can rotate to a position between the first lens assembly and the light redirecting assembly, and be located on an optical path between the first lens assembly and the light redirecting assembly, or move outside the optical path between the first lens assembly and the light redirecting assembly. Therefore, the second lens assembly is located on the optical path between the first lens assembly and the image sensor or located outside the optical path, to implement focal length switching of the camera module.

In a possible implementation, the second lens assembly, the light redirecting assembly, and the image sensor are distributed in the second direction, the first driving assembly and the second lens assembly are distributed in a third direction, the third direction is perpendicular to both the first direction and the second direction, and the second lens assembly moves to a position between the light redirecting assembly and the image sensor when driven by the first driving assembly. In other words, the added second lens assembly is located in the second direction, and the addition of the second lens assembly does not increase a thickness size of the camera module in the first direction. In this way, a risk of a thickness increase of the camera module in the first direction caused by the addition of the second lens assembly can be avoided, so that the thickness size of the camera module is reduced. When the camera module is disposed in an electronic device such as a mobile phone, the first direction may be a thickness direction of the electronic device. Reduction of the thickness size of the camera module in the first direction helps implement a light and thin design of the electronic device.

In a possible implementation, the first driving assembly includes a guide rail and a sliding part, the second lens assembly is disposed on the sliding part, the guide rail extends along the third direction, and the sliding part moves along the guide rail. The movement of the sliding part drives the second lens assembly to move along the third direction, so that the second lens assembly moves to a position between the light redirecting assembly and the image sensor, in other words, is located on an optical path between the light redirecting assembly and the image sensor, or moves outside the optical path between the light redirecting assembly and the image sensor. Therefore, the second lens assembly is located on the optical path between the first lens assembly and the image sensor or located outside the optical path, to implement focal length switching of the camera module.

In a possible implementation, the first driving assembly includes a rotating part, the second lens assembly is disposed on the rotating part, and the rotating part rotates around the second direction. The rotating part rotates to drive the second lens assembly to rotate around the second direction. The second lens assembly can rotate to a position between the light redirecting assembly and the image sensor, and is located on an optical path between the light redirecting assembly and the image sensor. Alternatively, the second lens assembly can rotate outside an optical path between the light redirecting assembly and the image sensor. Therefore, the second lens assembly is located on the optical path between the first lens assembly and the image sensor or located outside the optical path, to implement focal length switching of the camera module in the two states.

In a possible implementation, the first driving assembly further includes a movement driving part, the movement driving part includes a driving coil and a magnetic part, the magnetic part is disposed on the sliding part, the driving coil drives the magnetic part to move, and the magnetic part drives the sliding part to move along the guide rail.

In a possible implementation, when the second lens assembly moves to the optical path between the first lens assembly and the image sensor, an optical axis of the second lens assembly overlaps the optical axis of the first lens assembly. In this way, it can be ensured that the light ray passing through the first lens assembly illuminates the image sensor through the second lens assembly.

In a possible implementation, the light redirecting assembly includes a first light redirecting part and a second light redirecting part, where curvature of the first light redirecting part is different from curvature of the second light redirecting part.

The camera module further includes a second driving assembly. The first light redirecting part moves, when driven by the second driving assembly, to a position opposite to the first lens assembly and the image sensor; or the second light redirecting part moves, when driven by the second driving assembly, to a position opposite to the first lens assembly and the image sensor. When the first light redirecting part moves, when driven by the second driving assembly, to the position opposite to the first lens assembly and the image sensor, the camera module is in a fourth state, and a light ray in an external environment illuminates the first light redirecting part through the first lens assembly, and is redirected by the first light redirecting part to illuminate the first image sensor. Therefore, an image shooting function is implemented. A focal length of the camera module is related to a focal length of the first lens assembly and the curvature of the first light redirecting part.

When the second light redirecting part moves, when driven by the second driving assembly, to the position opposite to the first lens assembly and the image sensor, the camera module is in a sixth state, and a light ray in an external environment illuminates the second light redirecting part through the first lens assembly, and is redirected by the second light redirecting part to illuminate the image sensor. Therefore, an image shooting function is implemented. A focal length of the camera module is related to a focal length of the first lens assembly and the curvature of the second light redirecting part.

The curvature of the first light redirecting part is different from the curvature of the second light redirecting part. In this way, the camera module has different focal lengths when the camera module is in the fourth state and the sixth state. Therefore, the camera module can switch between at least two different focal lengths by switching between different states, and switching between different image shooting functions can also be implemented, to achieve a zoom effect. In this way, occupied space of the camera module is reduced while a requirement of a plurality of image shooting functions is met.

In addition, a switchable focal length may be increased by using the first light redirecting part and the second light redirecting part, to further expand a zoom adjustment range of the camera module. Therefore, more image shooting functions can be implemented by using one camera module, and the space occupied by the camera module is further effectively reduced while the requirement of the plurality of image shooting functions is ensured.

In a possible implementation, the image sensor includes a first image sensor and a second image sensor, the first image sensor, the second image sensor, and the light redirecting assembly are distributed in the second direction, the first image sensor and the second image sensor are located on two sides of the light redirecting assembly, the first image sensor is opposite to the first light redirecting part, and the second image sensor is opposite to the second light redirecting part.

The first light redirecting part moves along the second direction when driven by the second driving assembly, and the second light redirecting part moves along the second direction when driven by the second driving assembly. Therefore, the first light redirecting part moves to a position opposite to the first image sensor and the first lens assembly; or the second light redirecting part moves to a position opposite to the second image sensor and the first lens assembly. Therefore, the camera module switches between two states, to implement switching between different focal lengths, that is, between different image shooting functions.

In a possible implementation, the first light redirecting part is disposed to rotate around the first direction when driven by the second driving assembly, and the second light redirecting part is disposed to rotate around the first direction when driven by the second driving assembly. Therefore, the first light redirecting part rotates to a position opposite to the first image sensor and the first lens assembly; or the second light redirecting part rotates to a position opposite to the second image sensor and the first lens assembly, to implement switching between different focal lengths, that is, between different image shooting functions.

In a possible implementation, when the first light redirecting part is opposite to the first lens assembly, the optical axis of the first lens assembly passes through a center of the first light redirecting part; or
when the second light redirecting part is opposite to the first lens assembly, the optical axis of the first lens assembly passes through a center of the second light redirecting part. In this way, more light rays can illuminate the first light redirecting part or the second light redirecting part, and further illuminate the image sensor. This helps improve light utilization and improve an image shooting effect.

In a possible implementation, the first light redirecting part and the second light redirecting part are reflectors, and an included angle between the reflector and the optical axis of the lens assembly is 45°. The included angle between the reflector and the optical axis of the lens assembly is 45°, and directions of incident light and emergent light of the reflector are perpendicular to each other. In this way, when the light redirecting assembly and the first lens assembly are distributed in the first direction, and the image sensor and the light redirecting part are distributed in the second direction, it is convenient to implement verticality between the first direction and the second direction.

In a possible implementation, the camera module further includes a third driving assembly. The third driving assembly is connected to the first lens assembly, and the first lens assembly moves towards or away from the light redirecting assembly when driven by the third driving assembly. In this way, an optical path distance between the first lens assembly and the image sensor can be changed, to change an image distance to adjust a focal length, implement a focusing function, improve image shooting definition, and improve performance of the camera module.

A second aspect of this application provides a camera module, including a first lens assembly, a light redirecting assembly, and an image sensor. A light incidence side of the light redirecting assembly is opposite to the first lens assembly, a light emergence side of the light redirecting assembly is opposite to the image sensor, and the light redirecting assembly is configured to redirect, to illuminate the image sensor, a light ray that enters the camera module through the first lens assembly.

The light redirecting assembly includes a first light redirecting part and a second light redirecting part, where curvature of the first light redirecting part is different from curvature of the second light redirecting part.

The camera module further includes a second driving assembly. The first light redirecting part moves, when driven by the second driving assembly, to a position opposite to the first lens assembly and the image sensor; or the second light redirecting part moves, when driven by the second driving assembly, to a position opposite to the first lens assembly and the image sensor. When the first light redirecting part moves, when driven by the second driving assembly, to the position opposite to the first lens assembly and the image sensor, the camera module is in a fourth state, and a light ray in an external environment illuminates the first light redirecting part through the first lens assembly, and is redirected by the first light redirecting part to illuminate the first image sensor. Therefore, an image shooting function is implemented. A focal length of the camera module is related to a focal length of the first lens assembly and the curvature of the first light redirecting part.

When the second light redirecting part moves, when driven by the second driving assembly, to the position opposite to the first lens assembly and the image sensor, the camera module is in a sixth state, and a light ray in an external environment illuminates the second light redirecting part through the first lens assembly, and is redirected by the second light redirecting part to illuminate the image sensor. Therefore, an image shooting function is implemented. A focal length of the camera module is related to a focal length of the first lens assembly and the curvature of the second light redirecting part.

The curvature of the first light redirecting part is different from the curvature of the second light redirecting part. In this way, the camera module has different focal lengths when the camera module is in the fourth state and the sixth state. Therefore, the camera module can switch between at least two different focal lengths by switching between different states, and switching between different image shooting functions can also be implemented, to achieve a zoom effect. In this way, occupied space of the camera module is reduced while a requirement of a plurality of image shooting functions is met.

In a possible implementation, the image sensor includes a first image sensor and a second image sensor, the first image sensor, the second image sensor, and the light redirecting assembly are distributed in a second direction, the first image sensor and the second image sensor are located on two sides of the light redirecting assembly, the first image sensor is opposite to the first light redirecting part, the second image sensor is opposite to the second light redirecting part, and the second direction is perpendicular to an optical axis of the first lens assembly.

The first light redirecting part moves along the second direction when driven by the second driving assembly, and the second light redirecting part moves along the second direction when driven by the second driving assembly. Therefore, the first light redirecting part moves to a position opposite to the first image sensor and the first lens assembly; or the second light redirecting part moves to a position opposite to the second image sensor and the first lens assembly. Therefore, the camera module switches between two states, to implement switching between different focal lengths, that is, between different image shooting functions.

In a possible implementation, the first light redirecting part is disposed to rotate around a first direction when driven by the second driving assembly, the second light redirecting part is disposed to rotate around the first direction when driven by the second driving assembly, and the first direction is parallel to an optical axis of the first lens assembly. Therefore, the first light redirecting part rotates to a position opposite to the first image sensor and the first lens assembly; or the second light redirecting part rotates to a position opposite to the second image sensor and the first lens assembly, to implement switching between different focal lengths, that is, between different image shooting functions.

In a possible implementation, when the first light redirecting part is opposite to the first lens assembly, the optical axis of the first lens assembly passes through a center of the first light redirecting part; or
when the second light redirecting part is opposite to the first lens assembly, the optical axis of the first lens assembly passes through a center of the second light redirecting part. In this way, more light rays can illuminate the first light redirecting part or the second light redirecting part, and further illuminate the image sensor. This helps improve light utilization and improve an image shooting effect.

In a possible implementation, the first light redirecting part and the second light redirecting part are reflectors, and an included angle between the reflector and the optical axis of the lens assembly is 45°. In this way, directions of incident light and emergent light of the reflector are perpendicular to each other. When the light redirecting assembly and the first lens assembly are distributed in the first direction, and the image sensor and the light redirecting part are distributed in the second direction, it is convenient to implement verticality between the first direction and the second direction.

A third aspect of this application provides an electronic device, including at least a housing and any one of the foregoing camera modules, where the camera module is disposed on the housing.

### BRIEF DESCRIPTION OF DRAWINGS

FIG. 1 is a schematic diagram of a structure of an existing electronic device;
FIG. 2 is a schematic diagram of a structure of arrangement of two camera modules in an existing electronic device;
FIG. 3 is a schematic diagram of a structure of a camera module according to an embodiment of this application;
FIG. 4 is a schematic diagram of a system in which a camera module is in a first state according to an embodiment of this application;
FIG. 5 is a schematic diagram of a system in which a camera module is in a second state according to an embodiment of this application;
FIG. 6 is a schematic diagram of an appearance structure of a camera module according to an embodiment of this application;
FIG. 7 is a schematic diagram of an internal structure of a camera module according to an embodiment of this application;
FIG. 8 is a schematic diagram of a split structure of a camera module according to an embodiment of this application;
FIG. 9 is a schematic diagram of a cross-sectional structure of a camera module in a second state according to an embodiment of this application;
FIG. 10 is a schematic cross-sectional diagram of a camera module in a first state according to an embodiment of this application;
FIG. 11 is a schematic diagram of another appearance structure of a camera module according to an embodiment of this application;
FIG. 12 is a schematic diagram of another internal structure of a camera module according to an embodiment of this application;
FIG. 13 is a schematic diagram of another split structure of a camera module according to an embodiment of this application;
FIG. 14 is a schematic diagram of another structure of a camera module in a second state according to an embodiment of this application;
FIG. 15 is a schematic diagram of another structure of a camera module in a first state according to an embodiment of this application;
FIG. 16 is a schematic diagram of another split structure of a camera module according to an embodiment of this application;
FIG. 17 is a schematic diagram of another system in which a camera module is in a fourth state according to an embodiment of this application;
FIG. 18 is a schematic diagram of another system in which a camera module is in a sixth state according to an embodiment of this application;
FIG. 19 is a schematic diagram of another system in which a camera module is in a fourth state according to an embodiment of this application; and
FIG. 20 is a schematic diagram of another system in which a camera module is in a sixth state according to an embodiment of this application.

### Descriptions of reference numerals:

100: Electronic device; 10: Camera module; 11: First lens assembly;
12: Second lens assembly; 13: Light redirecting assembly; 131: First light redirecting part;
132: Second light redirecting part; 14: Image sensor; 14a: First image sensor;
14b: Second image sensor; 16: First driving assembly; 161: Guide rail;
162: Sliding part; 163: Rotating part; 164: Movement driving part;
1641: Driving coil; 1642: Magnetic part; 17: Second driving assembly;
171: Second driving controller; 18: Third driving assembly; 181: Third driving controller;
19a: First housing; 19b: First baseplate; 19c: Second housing;
19d: Second baseplate; 110: Mounting bracket; 111: Support plate;
20: Housing.

### DESCRIPTION OF EMBODIMENTS

Terms used in implementations of this application are only used to explain specific embodiments of this application, but are not intended to limit this application.

First, it should be noted that, in embodiments of this application, focusing is specifically a process of adjusting a focal length when a distance between a camera and a to-be-photographed object varies, so that the to-be-photographed object is blurred to clear.

Zooming is specifically implementing switching between different image shooting functions. The camera has different physical attributes (for example, focal lengths) in various image shooting function modes, so that a focal length of image shooting is changed, that is, optical zooming is implemented, to meet a requirement of different image shooting functions.

Embodiments of this application provide an electronic device. The electronic device includes but is not limited to an electronic device having a camera, such as a mobile phone, a tablet computer, a notebook computer, an ultra-mobile personal computer (ultra-mobile personal computer, UMPC), a handheld computer, an intercom, a netbook, a POS terminal, a personal digital assistant (personal digital assistant, PDA), a wearable device, a virtual reality device, a wireless USB flash drive, a Bluetooth speaker, a Bluetooth headset, or a vehicle-mounted apparatus.

The following uses an example in which the electronic device is a mobile phone for description.

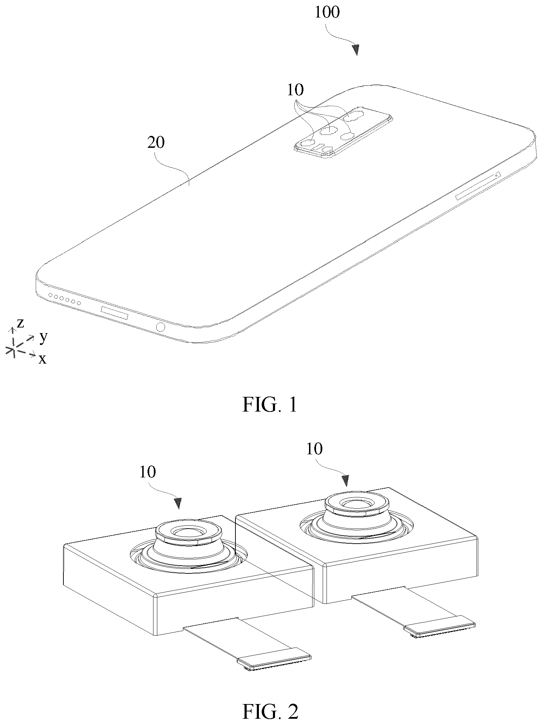

FIG. 1 is a schematic diagram of a structure of an existing electronic device.

The electronic device 100 having an image shooting function, for example, a mobile phone, includes a housing 20. A camera is disposed on the housing 20, to meet an image shooting requirement of a user. However, with continuous pursuit of an image shooting function, more functions are carried for image shooting of the mobile phone. For example, an ultra-wide-angle lens, a wide-angle lens, a primary camera lens, a long-focus lens, a 2-fold long-focus lens, a monocular lens, an infrared lens, and a depth lens are supported. However, because a camera with each function has a different physical attribute, a same physical component cannot be used to implement all image shooting functions, and functions of a plurality of cameras can be implemented only by stacking components.

Therefore, an increasing quantity of cameras are designed on the electronic device. As shown in FIG. 1, a rear-facing camera of the mobile phone includes at least four camera modules 10, and each camera module 10 includes at least a lens assembly, a driving part, and an image sensor. A light ray illuminates the image sensor through the lens assembly, to implement image capturing and image shooting. The lens assembly may move towards or away from the image sensor when driven by the driving part, to change a distance between the lens assembly and the image sensor, and further change an image distance to implement a focusing function. Lens assemblies and image sensors of different camera modules 10 are used for image shooting, that is, switching between different cameras is implemented, so that a focal length of image shooting is changed, and a zoom effect is implemented, thereby meeting a plurality of image shooting requirements.

However, it can also be clearly seen from FIG. 1 that, the plurality of camera modules 10 are stacked, and the entire camera occupies large space. This severely limits an internal layout of the electronic device 100. Especially, with continuous development of the electronic device 100 such as the mobile phone, occupied space and an arrangement manner of devices such as a main circuit board and a battery inside the electronic device 100 gradually become optimal, and it is difficult to further reduce sizes of the devices. Consequently, space for the camera module 10 is increasingly limited, and disposing of more cameras cannot be met. Selection can be performed only on an image shooting function, and it is difficult to achieve a balance between a plurality of image shooting functions and reduction of occupied space.

In addition, each time an image shooting function is introduced, an entire brand new camera module 10 needs to be introduced, to be specific, at least one lens assembly, one driving part, one image sensor, and the like need to be introduced. Consequently, costs of the electronic device 100 also increase sharply, and production costs of the electronic device 100 are increased.

Based on the foregoing technical problem, this application provides a camera module, to implement focal length switching in at least two different states. A zoom function can be implemented by using one camera module, so that space occupied by a camera is reduced as much as possible while it is ensured that a plurality of functions of the camera are not missing.

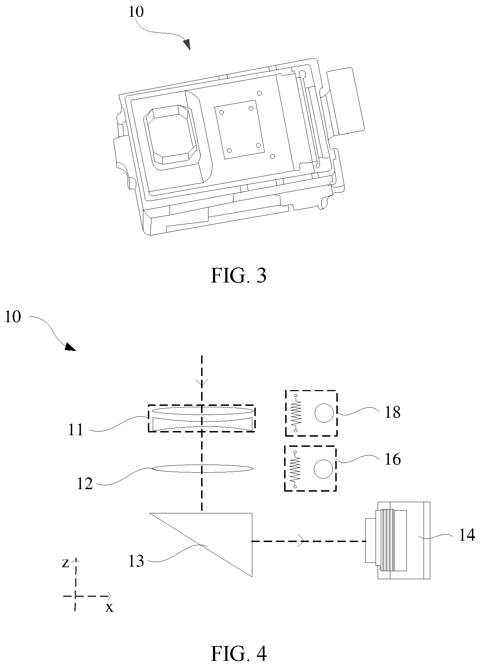

FIG. 2 is a schematic diagram of a structure of arrangement of two camera modules in an existing electronic device. FIG. 3 is a schematic diagram of a structure of a camera module according to an embodiment of this application.

For example, refer to FIG. 2. An example in which a rear-facing camera of the electronic device 100 has two camera modules 10 is used. The two cameras have different focal lengths, and may implement different functions. For example, the two cameras may respectively be a wide-angle camera and a primary camera, and zooming can be implemented through switching between the two camera modules. Refer to FIG. 3. An embodiment of this application provides a camera module 10. The functions of the foregoing two cameras can be implemented by using one camera module 10, to achieve a zoom objective. Space occupied by the camera can be effectively reduced while a requirement of a plurality of image shooting functions is met, thereby helping increase a layout possibility of the electronic device 100.

The following describes in detail the camera module provided in this embodiment of this application with reference to the accompanying drawings.

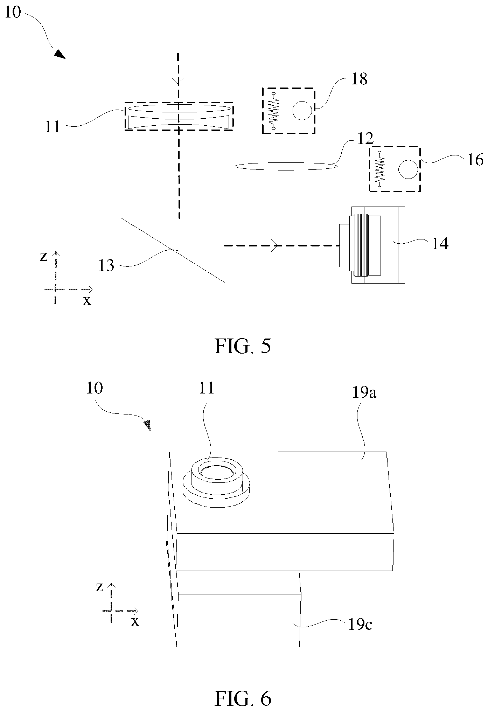

FIG. 4 is a schematic diagram of a system in which a camera module is in a first state according to an embodiment of this application. FIG. 5 is a schematic diagram of a system in which a camera module is in a second state according to an embodiment of this application.

Refer to FIG. 4. An embodiment of this application provides a camera module 10, including a first lens assembly 11, a light redirecting assembly 13, and an image sensor 14. A light ray in an external environment may enter the camera module 10 through the first lens assembly 11. The first lens assembly 11 may include at least a lens element. The lens element may be an optical lens like a lens. The first lens assembly 11 may include one lens element, or the first lens assembly 11 may include two or more lens elements.

The light redirecting assembly 13 is an optical component that can change an optical path of a light ray illuminating the light redirecting assembly 13. Specifically, for example, the light redirecting assembly 13 may be an optical lens like a prism or a reflector, or may be a component including a plurality of optical lenses. A light incidence side of the light redirecting assembly 13 is opposite to the first lens assembly 11, and a light emergence side of the light redirecting assembly 13 is opposite to the image sensor 14. The light ray that entering the camera module 10 through the first lens assembly 11 illuminates the light incidence side of the light redirecting assembly 13, and the optical path is changed by using the light redirecting assembly 13. The light ray is emitted from the light emergence side of the light redirecting assembly 13 and illuminates the image sensor 14.

The image sensor 14 converts, by using an optical-to-electrical conversion function of an optoelectronic component, a light image on a photosensitive surface into an electrical signal in a corresponding proportion relationship with the light image. The photosensitive surface of the image sensor 14 may be opposite to the light emergence side of the light redirecting assembly 13. The light ray emitted from the light redirecting assembly 13 illuminates the image sensor 14, and is received and recognized by the image sensor 14, to obtain an image.

The image sensor 14 may be a charge-coupled device (Charge-coupled Device, CCD), or may be a complementary metal oxide semiconductor (Complementary Metal Oxide Semiconductor, CMOS). Alternatively, the image sensor 14 may be another component that can implement the optical-to-electrical conversion function.

The optical path of the light ray passing through the light redirecting assembly 13 is changed, and an included angle exists between an emergent light ray and an incident light ray. Specifically, in this embodiment of this application, for example, a first direction is a direction (a z direction) parallel to an optical axis of the first lens assembly 11, and a second direction is a direction (an x direction) perpendicular to the first direction. The light ray passes through the first lens assembly 11 and illuminates the light redirecting assembly 13 based on the first direction, and the light ray emitted from the light emergence side of the light redirecting assembly 13 may illuminate the image sensor 14 based on the second direction. That is, the light redirecting assembly 13 makes the emergent light ray perpendicular to the incident light ray.

In this way, the light redirecting assembly 13 redirects and folds the optical path, so that space required by the optical path in the first direction is reduced, thereby reducing thickness space of the camera module 10 in the first direction. When the camera module 10 is assembled on an electronic device 100, for example, a mobile phone, for ease of image shooting, one end of a first lens module may be located on a front side (a side close to a display screen) or a back side (a side away from the display screen) of the electronic device, the first direction may be a thickness direction (namely, a z direction in FIG. 1) of the electronic device, and the second direction may be a width direction (namely, an x direction in FIG. 1) of the electronic device. Reduction of the thickness space of the camera module 10 in the first direction helps implement a light and thin design of the electronic device.

Specifically, the light redirecting assembly 13 and the first lens assembly 11 may be distributed in the first direction z, and the image sensor 14 and the light redirecting assembly 13 may be distributed in the second direction x. Therefore, the light ray passes through the first lens assembly 11 based on the first direction and illuminates the light redirecting assembly 13, and then, the light ray is emitted from the light redirecting assembly 13 based on the second direction and illuminates the image sensor 14.

It should be noted that the second direction may alternatively be a length direction (namely, a y direction in the figure) of the electronic device, and may be specifically selected and set based on an internal structure layout of the electronic device.

Still refer to FIG. 4. The camera module 10 may further include a second lens assembly 12 and a first driving assembly 16. The first driving assembly 16 may drive the second lens assembly 12 to move. The second lens assembly 12 may move to an optical path between the first lens assembly 11 and the image sensor 14 or move outside the optical path when driven by the first driving assembly 16. In this embodiment of this application, when the camera module 10 is in a first state, the second lens assembly 12 moves to the optical path between the first lens assembly 11 and the image sensor 14; or when the camera module 10 is in a second state, the second lens assembly 12 moves outside the optical path between the first lens assembly 11 and the image sensor 14.

When the second lens assembly 12 moves to the optical path between the first lens assembly 11 and the image sensor 14, that is, when the camera module 10 is in the first state, as shown in FIG. 4, the second lens assembly 12 may be located between the first lens assembly 11 and the light redirecting assembly 13. The light ray passing through the first lens assembly 11 illuminates the second lens assembly 12, and after passing through the second lens assembly 12, the light ray is redirected the light redirecting assembly 13 to illuminate the image sensor 14, to perform imaging on the image sensor 14.

In this way, an imaging focal length of the camera module 10 is related to a focal length of the first lens assembly 11 and a focal length of the second lens assembly 12. In this case, an equivalent focal length of the camera module 10 in the first state is: Focal length new = f(Focal length A, Focal length B), where the focal length A is the focal length of the first lens assembly 11, and the focal length B is the focal length of the second lens assembly 12.

When the second lens assembly 12 is located outside the optical path between the first lens assembly 11 and the image sensor 14, that is, when the camera module 10 is in the second state, as shown in FIG. 5, the second lens assembly 12 moves outside the optical path between the first lens assembly 11 and the image sensor 14. The light ray passing through the first lens assembly 11 illuminates the light redirecting assembly 13, and is redirected by the light redirecting assembly 13 to illuminate the image sensor 14, to perform imaging on the image sensor 14.

In this way, an imaging focal length of the camera module 10 is related to a focal length of the first lens assembly 11. In this case, an equivalent focal length of the camera module 10 in the second state is: Focal length new = f(Focal length A), where the focal length A is the focal length of the first lens assembly 11.

That is, when in the two states, to be specific, the second lens assembly 12 is driven to be located on the optical path between the first lens assembly 11 and the image sensor 14 and located outside the optical path, the camera module 10 has different focal lengths. In other words, the camera module 10 has different focal lengths when the camera module 10 is in the first state and the second state. Therefore, the camera module 10 may switch between at least two different focal lengths, to implement switching between different image shooting functions. In other words, different image shooting functions can be implemented by using one camera module 10, so that space occupied by the camera module 10 can be effectively reduced while a requirement of a plurality of image shooting functions is met.

The camera module 10 may include two or more second lens assemblies 12, so that the camera module 10 can have a larger zoom adjustment range, and more different image shooting functions can be implemented by using one camera module 10, thereby further meeting a requirement of multi-functional image shooting.

In addition, the focal length of the camera module 10 can be changed by adding the second lens assembly 12 and a driving assembly of the second lens assembly 12, to implement a zoom effect. An image shooting function of the camera module 10 is added without introducing an entire module, and this helps reduce costs of the electronic device 100.

When the camera module 10 is in the first state, to be specific, when the second lens assembly 12 is located on the optical path between the first lens assembly 11 and the image sensor 14, center lines or optical axes of the first lens assembly 11 and the second lens assembly 12 may overlap, to ensure that the light ray passing through the first lens assembly 11 illuminates the image sensor 14 through the second lens assembly 12.

Still refer to FIG. 4 and FIG. 5. The camera module 10 may further include a third driving assembly 18. The third driving assembly 18 may be connected to the first lens assembly 11. The third driving assembly 18 drives the first lens assembly 11 to move along the first direction z, to be specific, the first lens assembly 11 moves towards or away from the light redirecting assembly 13 when driven by the third driving assembly 18. In this way, an optical path distance between the first lens assembly 11 and the image sensor 14 can be changed, to change an image distance to adjust a focal length, implement a focusing function, improve image shooting definition, and improve performance of the camera module 10.

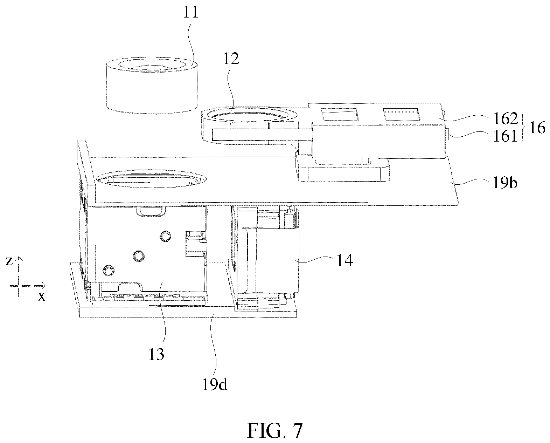

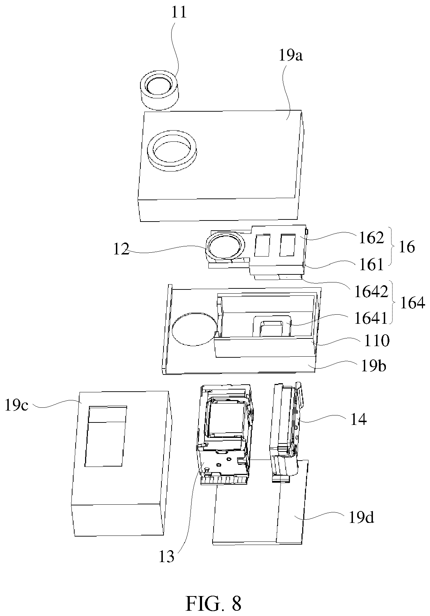

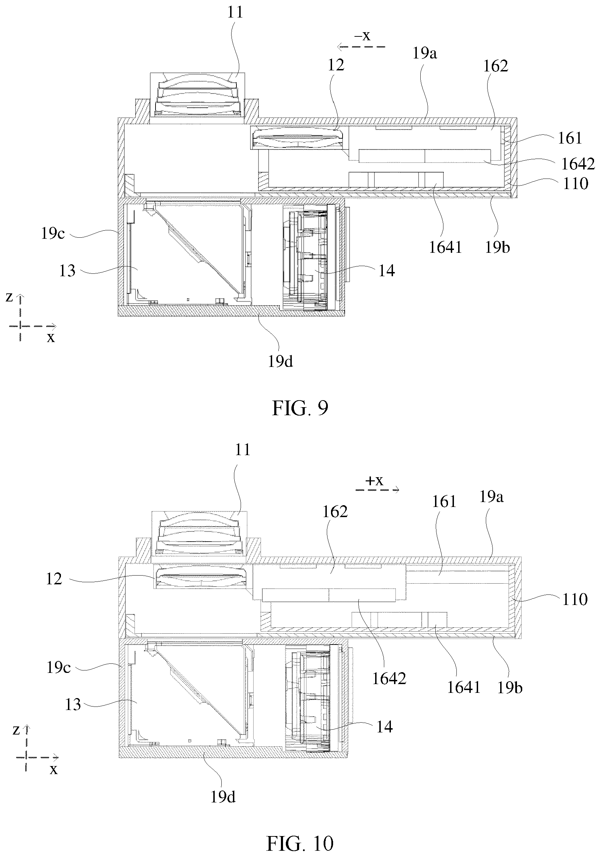

FIG. 6 is a schematic diagram of an appearance structure of a camera module according to an embodiment of this application. FIG. 7 is a schematic diagram of an internal structure of a camera module according to an embodiment of this application. FIG. 8 is a schematic diagram of a split structure of a camera module according to an embodiment of this application. FIG. 9 is a schematic diagram of a cross-sectional structure of a camera module in a second state according to an embodiment of this application. FIG. 10 is a schematic cross-sectional diagram of a camera module in a first state according to an embodiment of this application.

In embodiments of this application, a second lens assembly 12 moves to an optical path between a first lens assembly 11 and an image sensor 14 or moves outside the optical path when driven by a first driving assembly 16.

Specifically, in a possible implementation, when the camera module 10 is in the first state, the second lens assembly 12 may move to a position between the first lens assembly 11 and a light redirecting assembly 13, so that the second lens assembly 12 is located on an optical path between the first lens assembly 11 and the light redirecting assembly 13. Therefore, the second lens assembly 12 is located on the optical path between the first lens assembly 11 and the image sensor 14.

When the camera module 10 is in the second state, the second lens assembly 12 moves outside an optical path between the first lens assembly 11 and a light redirecting assembly 13. Therefore, the second lens assembly 12 moves outside the optical path between the first lens assembly 11 and the image sensor 14.

Refer to FIG. 6. The camera module 10 may include a first housing 19a and a second housing 19c. In a first direction z, the second housing 19c and the first housing 19a may be distributed in the first direction z. The first lens assembly 11, the second lens assembly 12, the first driving assembly 16, and a third driving assembly 18 may all be disposed in the first housing 19a. The light redirecting assembly 13 and the image sensor 14 may be disposed in the second housing 19c.

Refer to FIG. 7. The first lens assembly 11, the second lens assembly 12, and the light redirecting assembly 13 may be distributed along the first direction z. For example, the second lens assembly 12 is located below the first lens assembly 11, and the first driving assembly 16 is connected to the second lens assembly 12. The first driving assembly 16 and the second lens assembly 12 may be distributed in a second direction x, and the light redirecting assembly 13 may be located below the second lens assembly 12.

The light redirecting assembly 13 and the image sensor 14 are distributed along the second direction x. In the first direction z, the image sensor 14 may be located below the second lens assembly 12 and the first driving assembly 16, to further improve integration of the camera module 10 and reduce a size of the camera module 10.

The first driving assembly 16 drives the second lens assembly 12 to move to the position between the first lens assembly 11 and the light redirecting assembly 13. Therefore, the second lens assembly 12 is located on the optical path between the first lens assembly 11 and the image sensor 14. Correspondingly, the first driving assembly 16 may alternatively drive the second lens assembly 12 to move in a reverse direction, so that the second lens assembly 12 moves outside the optical path between the first lens assembly 11 and the image sensor 14. Switching between the first state and the second state of the camera module 10 is implemented, switching between different focal lengths of the camera module 10 is implemented, and a zoom function of the camera module 10 is implemented.

The second lens assembly 12 moves to the optical path between the first lens assembly 11 and the light redirecting assembly 13 or moves outside the optical path when driven by the first driving assembly 16. The movement may be a straight-line movement, or may be rotation, or may be a movement in another form. It can be ensured that, in the first state, the second lens assembly 12 moves the position between the first lens assembly 11 and the light redirecting assembly 13, and in the second state, the second lens assembly 12 moves outside the optical path between the first lens assembly 11 and the light redirecting assembly 13.

Specifically, refer to FIG. 7. The second lens assembly 12 may move along the second direction x when driven by the first driving assembly 16. Therefore, the second lens assembly 12 moves to the position between the first lens assembly 11 and the light redirecting assembly 13, in other words, is located on the optical path between the first lens assembly 11 and the light redirecting assembly 13. Alternatively, the second lens assembly 12 moves outside the optical path between the first lens assembly 11 and the light redirecting assembly 13. Therefore, switching between the two states of the camera module 10 is implemented and a zoom function is implemented.

A direction in which the second lens assembly 12 moves towards the first lens assembly 11 is a -x direction, and a direction in which the second lens assembly 12 moves away from the first lens assembly 11 is a +x direction.

Specifically, refer to FIG. 8. The first driving assembly 16 may include a guide rail 161 and a sliding part 162. The second lens assembly 12 is disposed on the sliding part 162. The guide rail 161 extends along the second direction, and the sliding part 162 moves along the guide rail 161. The movement of the sliding part 162 drives the second lens assembly 12 to move along the second direction, so that the second lens assembly 12 moves to the position between the first lens assembly 11 and the light redirecting assembly 13, in other words, is located on the optical path between the first lens assembly 11 and the light redirecting assembly 13, or moves outside the optical path between the first lens assembly 11 and the light redirecting assembly 13, to implement switching between the first state and the second state of the camera module 10, that is, implement a focusing function of the camera module 10.

The camera module 10 may include a first baseplate 19b. The first housing 19a may be buckled on the first baseplate 19b. The first baseplate 19b may have a mounting bracket 110. The guide rail 161 and the sliding part 162 may be located in the mounting bracket 110. Specifically, one end of the guide rail 161 is fastened on an inner side wall of the mounting bracket 110, and the other end of the guide rail 161 extends along the second direction. The sliding part 162 is disposed on the guide rail 161 in a sliding manner, and the second lens assembly 12 is disposed on a side that is of the sliding part 162 and that is away from one end of the guide rail 161. The sliding part 162 slides along the guide rail 161, and drives the second lens assembly 12 to move in the second direction.

The camera module 10 may further include a second baseplate 19d, the second housing 19c may be buckled on the second baseplate 19d, and the light redirecting assembly 13 and the image sensor 14 may be disposed on the second baseplate 19d.

The first driving assembly 16 may further include a movement driving part 164. The movement driving part 164 is configured to drive the sliding part 162 to move along the guide rail 161. Specifically, the movement driving part 164 may include a driving coil 1641 and a magnetic part 1642. The magnetic part 1642 is disposed on the sliding part 162. The driving coil 1641 may be disposed on a bottom wall of the mounting bracket 110. After the driving coil 1641 is powered on, a magnetic field is generated, to drive the magnetic part 1642 to move. The magnetic part 1642 drives the sliding part 162 to move along the guide rail 161, to further drive the second lens assembly 12 to move along the second direction.

Refer to FIG. 9. The camera module 10 is in the second state, to be specific, the second lens assembly 12 is not located between the first lens assembly 11 and the light redirecting assembly 13, and the second lens assembly 12 is located outside the optical path between the first lens assembly 11 and the light redirecting assembly 13. A light ray in an external environment illuminates the light redirecting assembly 13 through the first lens assembly 11, and is redirected by the light redirecting assembly 13 to illuminate the image sensor 14. A focal length of the camera module 10 is related to a focal length of the first lens assembly 11.

When the focal length of the camera module 10 needs to be changed, that is, a function of the camera module 10 needs to be switched, a current is supplied to the driving coil 1641, so that the driving coil 1641 drives the magnetic part 1642 to move along the second direction. Specifically, for example, the magnetic part 1642 moves along the -x direction in the figure, in other words, moves towards the first lens assembly 11. The magnetic part 1642 drives the sliding part 162 to move in the -x direction, to further drive the second lens assembly 12 to move along the -x direction, so that the second lens assembly 12 moves to the position between the first lens assembly 11 and the light redirecting assembly 13, and finally optical axes of the first lens assembly 11 and the second lens assembly 12 overlap, that is, as shown in FIG. 10. In this case, the camera module 10 is in the first state.

When the camera module 10 is in the first state shown in FIG. 10, a light ray in an external environment enters the camera module 10 through the first lens assembly 11, illuminates the light redirecting assembly 13 through the second lens assembly 12, and is redirected by the light redirecting assembly 13 to illuminate the image sensor 14. A focal length of the camera module 10 is related to a focal length of the first lens assembly 11 and a focal length of the second lens assembly 12. In this way, the camera module 10 has different focal lengths when the camera module 10 is in the first state and the second state, to implement a focusing function of the camera module 10.

Correspondingly, when the camera module 10 is in the first state, the focal length of the camera module 10 needs to be changed, and a current in a reverse direction may be supplied to the driving coil 1641, so that the driving coil 1641 drives the magnetic part 1642 to move along the +x direction in FIG. 10, in other words, move in a direction away from the first lens assembly 11. The magnetic part 1642 drives the sliding part 162 to move in the +x direction. Therefore, the sliding part 162 drives the second lens assembly 12 to move along the +x direction, so that the second lens assembly 12 moves outside the optical path between the first lens assembly 11 and the light redirecting assembly 13. In this case, the camera module 10 is in the second state shown in FIG. 9.

Alternatively, the second lens assembly 12 may rotate when driven by the first driving assembly 16. For example, the second lens assembly 12 may rotate around the first direction z. For example, the first driving assembly 16 may include a rotation axis and a rotating part 163. The rotating part 163 is disposed on the rotation axis in a rotating manner. The rotating part 163 may rotate around the first direction z when driven by the movement driving part 164, to drive the second lens assembly 12 to rotate around the first direction z, so that the second lens assembly 12 can rotate to the position between the first lens assembly 11 and the light redirecting assembly 13, or the second lens assembly 12 can rotate outside the optical path between the first lens assembly 11 and the light redirecting assembly 13. Therefore, the second lens assembly 12 is located on the optical path between the first lens assembly 11 and the image sensor 14 or located outside the optical path.

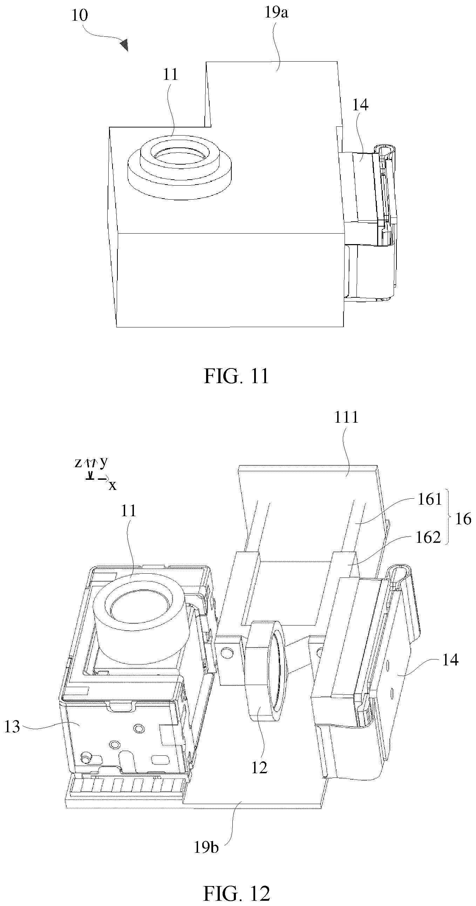

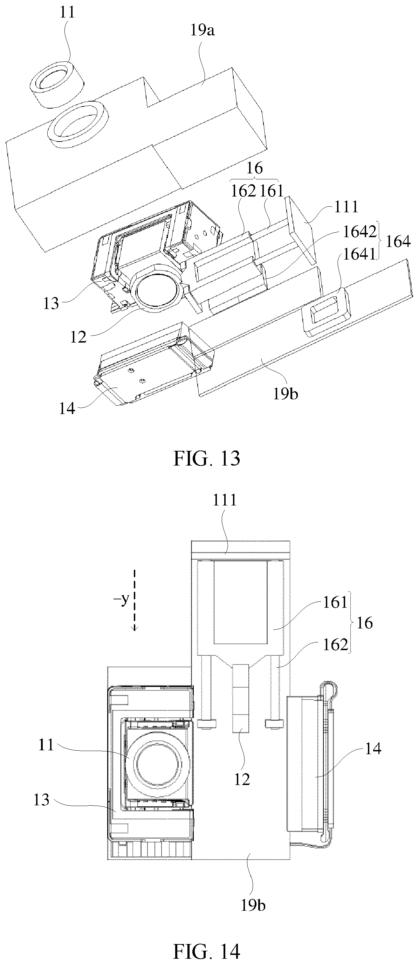

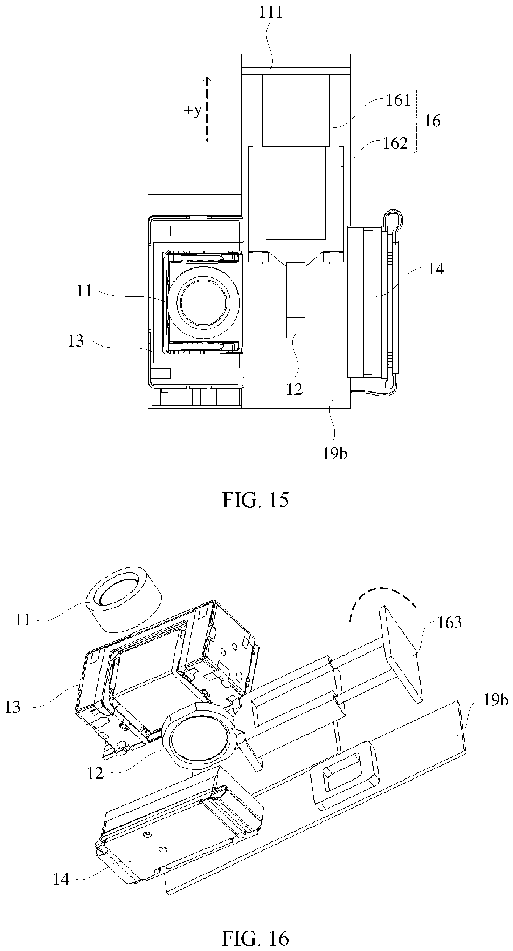

FIG. 11 is a schematic diagram of another appearance structure of a camera module according to an embodiment of this application. FIG. 12 is a schematic diagram of another internal structure of a camera module according to an embodiment of this application. FIG. 13 is a schematic diagram of another split structure of a camera module according to an embodiment of this application. FIG. 14 is a schematic diagram of another structure of a camera module in a second state according to an embodiment of this application. FIG. 15 is a schematic diagram of another structure of a camera module in a first state according to an embodiment of this application.

In another possible implementation, when the camera module 10 is in the first state, a second lens assembly 12 may move to a position between a light redirecting assembly 13 and an image sensor 14, so that the second lens assembly 12 is located on an optical path between the light redirecting assembly 13 and the image sensor 14. Therefore, the second lens assembly 12 is located on an optical path between a first lens assembly 11 and the image sensor 14.

When the camera module 10 is in the second state, a second lens assembly 12 moves outside an optical path between a light redirecting assembly 13 and an image sensor 14. Therefore, the second lens assembly 12 moves outside an optical path between a first lens assembly 11 and the image sensor 14.

Refer to FIG. 11. In this implementation, the camera module 10 may include a first housing 19a. The first lens assembly 11, the second lens assembly 12, a first driving assembly 16, a third driving assembly 18, the light redirecting assembly 13, and the image sensor 14 may all be located in the first housing 19a, and the first lens assembly 11 extends to a side surface that is of the first housing 19a and that is away from the image sensor 14.

Refer to FIG. 12. The second lens assembly 12, the light redirecting assembly 13, and the image sensor 14 are distributed in a second direction x. Specifically, for example, the light redirecting assembly 13 and the image sensor 14 may be located on two sides of the second lens assembly 12. In other words, the added second lens assembly 12 is located in the second direction x, and the addition of the second lens assembly 12 does not increase a thickness size of the camera module 10 in a first direction z. In this way, a risk of a thickness increase of the camera module 10 in the first direction z caused by the addition of the second lens assembly 12 can be avoided, so that the thickness size of the camera module 10 is reduced. When the camera module 10 is disposed in an electronic device 100 such as a mobile phone, the first direction z may be a thickness direction of the electronic device. Reduction of the thickness size of the camera module 10 in the first direction helps implement a light and thin design of the electronic device.

The first driving assembly 16 drives the second lens assembly 12 to move to the position between the light redirecting assembly 13 and the image sensor 14, so that the second lens assembly 12 is located on the optical path between the light redirecting assembly 13 and the image sensor 14. Therefore, the second lens assembly 12 is located on the optical path between the first lens assembly 11 and the image sensor 14.

Correspondingly, the first driving assembly 16 may alternatively drive the second lens assembly 12 to move in a reverse direction, and finally make the second lens assembly 12 be located outside the optical path between the light redirecting assembly 13 and the image sensor 14. Therefore, the second lens assembly 12 is located outside the optical path between the first lens assembly 11 and the image sensor 14. Switching between the first state and the second state of the camera module 10 is implemented, switching between different focal lengths of the camera module 10 is implemented, and a zoom function of the camera module 10 is implemented.

The second lens assembly 12 moves to the optical path between the light redirecting assembly 13 and the image sensor 14 or moves outside the optical path when driven by the first driving assembly 16. The movement may be a straight-line movement, or may be rotation around the second direction x, or may be a movement in another form. In the first state, the second lens assembly 12 can move to the optical path between the light redirecting assembly 13 and the image sensor 14, and in the second state, the second lens assembly 12 can move outside the optical path between the light redirecting assembly 13 and the image sensor 14.

Specifically, as shown in FIG. 12, the first driving assembly 16 and the second lens assembly 12 may be distributed in a third direction y, where the third direction is perpendicular to the first direction and the second direction, and the third direction may be a length direction of the electronic device 100 (where reference may be made to a y direction in FIG. 1). Refer to FIG. 13. The second lens assembly 12 may move along the third direction y when driven by the first driving assembly 16. Therefore, the second lens assembly 12 moves to the optical path between the light redirecting assembly 13 and the image sensor 14, or the second lens assembly 12 moves outside the optical path between the light redirecting assembly 13 and the image sensor 14, to implement switching between the two states of the camera module 10 and implement a zoom function.

A direction in which the second lens assembly 12 moves towards the first lens assembly 11 is a -y direction, and a direction in which the second lens assembly 12 moves away from the first lens assembly 11 is a +y direction.

The first driving assembly 16 may include a guide rail 161 and a sliding part 162. The second lens assembly 12 is disposed on the sliding part 162. The guide rail 161 extends along the third direction. The sliding part 162 is disposed on the guide rail 161 and moves along the guide rail 161. The movement of the sliding part 162 drives the second lens assembly 12 to move along the third direction y, so that the second lens assembly 12 moves to the position between the light redirecting assembly 13 and the image sensor 14, in other words, is located on the optical path between the light redirecting assembly 13 and the image sensor 14, or moves outside the optical path between the light redirecting assembly 13 and the image sensor 14.

Still refer to FIG. 13. The camera module 10 may include a first baseplate 19b. The first housing 19a is buckled on the first baseplate 19b. A support plate 111 may be disposed on the first baseplate 19b. One end of the guide rail 161 may be fastened on the support plate 111, and the other end of the guide rail 161 extends along the third direction. The sliding part 162 is disposed on the guide rail 161 in a sliding manner, and the second lens assembly 12 is disposed on a side that is of the sliding part 162 and that is away from one end of the guide rail 161. The sliding part 162 slides along the guide rail 161, and drives the second lens assembly 12 to move in the third direction.

The first driving assembly 16 may further include a movement driving part 164. The movement driving part 164 may include a driving coil 1641 and a magnetic part 1642. The magnetic part 1642 is disposed on the sliding part 162. The driving coil 1641 may be disposed on the first baseplate 19b. After the driving coil 1641 is powered on, a magnetic field is generated, to drive the magnetic part 1642 to move. The magnetic part 1642 drives the sliding part 162 to move along the guide rail 161, to further drive the second lens assembly 12 to move along the third direction.

Refer to FIG. 14. The camera module 10 is in the second state, to be specific, the second lens assembly 12 is not located between the first lens assembly 11 and the light redirecting assembly 13, in other words, the second lens assembly 12 is located outside the optical path between the first lens assembly 11 and the light redirecting assembly 13. A light ray in an external environment illuminates the light redirecting assembly 13 through the first lens assembly 11, and is redirected by the light redirecting assembly 13 to illuminate the image sensor 14. A focal length of the camera module 10 is related to a focal length of the first lens assembly 11.

When the focal length of the camera module 10 needs to be changed, that is, zooming needs to be performed, a current is supplied to the driving coil 1641, so that the driving coil 1641 drives the magnetic part 1642 to move along the third direction. Specifically, for example, the magnetic part 1642 moves along the -y direction in the figure, in other words, moves towards the first lens assembly 11. The magnetic part 1642 drives the sliding part 162 to move in the -y direction, to further drive the second lens assembly 12 to move along the -y direction, so that the second lens assembly 12 moves to the position between the light redirecting assembly 13 and the image sensor 14, and finally optical axes of the first lens assembly 11 and the second lens assembly 12 overlap, that is, as shown in FIG. 15. In this case, the camera module 10 is in the first state.

When the camera module 10 is in the first state shown in FIG. 15, a light ray in an external environment enters the camera module 10 through the first lens assembly 11, is redirected by the light redirecting assembly 13 to illuminate the second lens assembly, and illuminates the image sensor 14 through the second lens assembly 12. A focal length of the camera module 10 is related to a focal length of the first lens assembly 11 and a focal length of the second lens assembly 12. In this way, the camera module 10 has different focal lengths when the camera module 10 is in the first state and the second state, and a focusing function of the camera module 10 is implemented through switching between the first state and the second state of the camera module 10.

Correspondingly, when the camera module 10 is in the first state, the focal length of the camera module 10 needs to be changed, and a current in a reverse direction may be supplied to the driving coil 1641, so that the driving coil 1641 drives the magnetic part 1642 to move along the +y direction in FIG. 15, in other words, move in a direction away from the first lens assembly 11. The magnetic part 1642 drives the sliding part 162 to move in the +y direction. Therefore, the sliding part 162 drives the second lens assembly 12 to move along the +y direction, so that the second lens assembly 12 moves outside the optical path between the light redirecting assembly 13 and the image sensor 14, and the camera module 10 is in the second state shown in FIG. 14.

FIG. 16 is a schematic diagram of another split structure of a camera module according to an embodiment of this application.

Alternatively, a second lens assembly 12 may rotate around a second direction x when driven by a first driving assembly 16.

Specifically, refer to FIG. 16. The first driving assembly 16 may include a rotating part 163 and a rotation axis (not shown in the figure). The rotating part 163 is disposed on the rotation axis in a rotating manner. For example, the rotating part 163 may be the foregoing support plate 111, and the rotating part 163 may rotate around the second direction when driven by a movement driving part 164, to drive the second lens assembly 12 to rotate around the second direction. The second lens assembly 12 may rotate to an optical path between a light redirecting assembly 13 and an image sensor 14, or the second lens assembly 12 may rotate outside the optical path between the light redirecting assembly 13 and the image sensor 14. Therefore, the second lens assembly 12 is located on an optical path between a first lens assembly 11 and the image sensor 14 or located outside the optical path, to implement switching between two states of the camera module 10 and implement a zoom function.

Still refer to FIG. 16. For example, when the camera module 10 is in a first state, the first driving assembly 16 may drive the second lens assembly 12 to rotate around the second direction clockwise as shown by an arrow in the figure, so that the second lens assembly 12 moves outside the optical path between the light redirecting assembly 13 and the image sensor 14. When the camera module 10 is in a second state, the first driving assembly 16 may drive the second lens assembly 12 to rotate anticlockwise, so that the second lens assembly 12 moves to a position between the light redirecting assembly 13 and the image sensor 14.

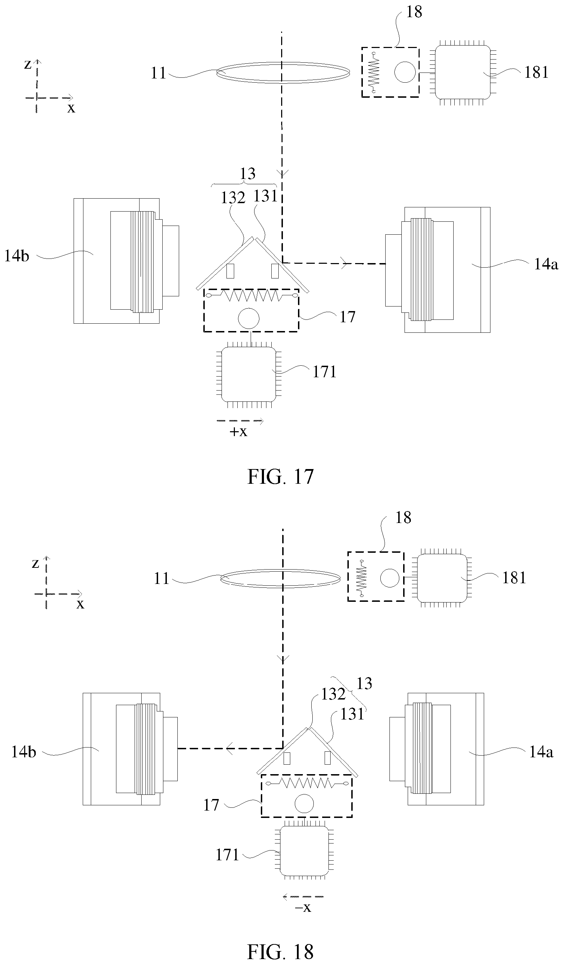

FIG. 17 is a schematic diagram of another system in which a camera module is in a fourth state according to an embodiment of this application. FIG. 18 is a schematic diagram of another system in which a camera module is in a sixth state according to an embodiment of this application.

In embodiments of this application, a light redirecting assembly 13 may include a plurality of light redirecting parts, and the light redirecting part may be an optical lens such as a prism or a reflector. Refer to FIG. 17 and FIG. 18. For example, the light redirecting assembly 13 includes two light redirecting parts: a first light redirecting part 131 and a second light redirecting part 132.

The camera module 10 may include a second driving assembly 17. The second driving assembly 17 may drive the first light redirecting part 131 and the second light redirecting part 132 to move. Specifically, the first light redirecting part 131 may move, when driven by the second driving assembly 17, to a position opposite to a first lens assembly 11 and an image sensor (for example, a first image sensor 14a in FIG. 17); or the second light redirecting part 132 may move, when driven by the second driving assembly 17, to a position opposite to a first lens assembly 11 and an image sensor (for example, a second image sensor 14b in FIG. 18).

That the first light redirecting part 131 is opposite to the first lens assembly 11 and the image sensor 14a specifically means that a light incidence side of the first light redirecting part 131 is opposite to the first lens assembly 11, and a light emergence side of the first light redirecting part 131 is opposite to the image sensor 14a. Correspondingly, this is also applicable to the second light redirecting part 132.

It should be noted that, when the first light redirecting part 131 moves to the position opposite to the first lens assembly 11 and the image sensor, a second lens assembly may be located on an optical path between the first lens assembly 11 and the image sensor. In this case, a state of the camera module 10 is a third state. Alternatively, a second lens assembly may be located outside an optical path between the first lens assembly 11 and the image sensor. In this case, a state of the camera module 10 is a fourth state.

Correspondingly, when the second light redirecting part 132 moves to the position opposite to the first lens assembly 11 and the image sensor, a second lens assembly may be located on an optical path between the first lens assembly 11 and the image sensor. In this case, a state of the camera module 10 is a fifth state. Alternatively, a second lens assembly may be located outside an optical path between the first lens assembly 11 and the image sensor. In this case, a state of the camera module 10 is a sixth state.

The camera module 10 in the first state may have a same structure as the camera module 10 in any one of the third state and the fifth state, and the camera module 10 in the second state may have a same structure as the camera module 10 in any one of the fourth state and the fifth state.

Refer to FIG. 17 and FIG. 18. An example in which the second lens assembly (not shown in the figure) is located outside the optical path between the first lens assembly 11 and the image sensor 14 is used for description.

Refer to FIG. 17. When the first light redirecting part 131 moves, when driven by the second driving assembly 17, to the position opposite to the first lens assembly 11 and the image sensor (the first image sensor 14a), the camera module 10 is in the fourth state, and a light ray in an external environment illuminates the first light redirecting part 131 through the first lens assembly 11, and is redirected by the first light redirecting part 131 to illuminate the first image sensor, to implement an image shooting function.

Refer to FIG. 18. When the second light redirecting part 132 moves, when driven by the second driving assembly 17, to the position opposite to the first lens assembly 11 and the image sensor (the second image sensor 14b), the camera module 10 is in the sixth state, and a light ray in an external environment illuminates the second light redirecting part 132 through the first lens assembly 11, and is redirected by the second light redirecting part 132 to illuminate the image sensor, to implement an image shooting function.

Both the first light redirecting part 131 and the second light redirecting part 132 have preset curvature, in other words, neither the first light redirecting part 131 nor the second light redirecting part 132 is a planar mirror. When the camera module 10 is in the fourth state, the light ray passes through the first lens assembly 11 and illuminates the image sensor through the first light redirecting part 131, and a focal length of the camera module 10 is related to a focal length of the first lens assembly 11 and the curvature of the first light redirecting part 131. In this case, in the fourth state, the focal length of the camera module 10 is: Focal length new = f(Focal length A, a), where the focal length A is the focal length of the first lens assembly 11, and a is the curvature of the first light redirecting part 131.

Correspondingly, when the camera module 10 is in the sixth state, the light ray passes through the first lens assembly 11 and illuminates the image sensor through the second light redirecting part 132, and a focal length of the camera module 10 is related to a focal length of the first lens assembly 11 and the curvature of the second light redirecting part 132. In this case, in the sixth state, the focal length of the camera module 10 is: Focal length new = f(Focal length A, β), where the focal length A is the focal length of the first lens assembly 11, and β is the curvature of the second light redirecting part 132.

The curvature a of the first light redirecting part 131 is different from the curvature β of the second light redirecting part 132. In this way, the camera module 10 has different focal lengths when the camera module 10 is in the fourth state and the sixth state. Therefore, the camera module 10 can switch between at least two different focal lengths by switching between different states, and switching between different image shooting functions can also be implemented, to achieve a zoom effect.

Correspondingly, when the camera module 10 is in the third state, to be specific, the second lens assembly 12 is located between the first lens assembly 11 and the image sensor 14 (where reference is made to FIG. 4), and the first light redirecting part 131 is opposite to the first lens assembly 11 and the image sensor 14, a focal length of the camera module 10 is related to a focal length of the first lens assembly 11, a focal length of the second lens assembly 12, and a focal length of the first light redirecting part 131.

When the camera module 10 is in the fifth state, to be specific, the second lens assembly 12 is located between the first lens assembly 11 and the image sensor 14, and the second light redirecting part 132 is opposite to the first lens assembly 11 and the image sensor 14, a focal length of the camera module 10 is related to a focal length of the first lens assembly 11, a focal length of the second lens assembly 12, and a focal length of the second light redirecting part 132.

In this way, the camera module 10 has different focal lengths when the camera module 10 is in the foregoing four states. The second lens assembly 12, the first light redirecting part 131, or the second light redirecting part 132 is used between the first lens assembly 11 and the image sensor 14 to implement switching between the focal lengths of the camera module 10 and implement a zoom function. Therefore, a plurality of image shooting functions can be implemented by using one camera module 10, and occupied space of the camera module 10 is reduced while a requirement of the plurality of image shooting functions is met.

However, the camera module 10 has a plurality of states corresponding to different focal lengths, so that a zoom adjustment range of the camera module 10 can be further expanded. Therefore, more image shooting functions can be implemented by using one camera module 10, and the space occupied by the camera module 10 is further effectively reduced while the requirement of the plurality of image shooting functions is ensured.

When the light redirecting assembly 13 includes two or more light redirecting assemblies 13 with different curvature, the camera module 10 has a larger implementable zoom adjustment range, so that more image shooting functions can be implemented by using one camera module 10.

To ensure that more light rays passing through the first lens assembly 11 illuminate the first light redirecting part 131 or the second light redirecting part 132, when the first light redirecting part 131 is opposite to the first lens assembly 11, an optical axis of the first lens assembly 11 may pass through a center of the first light redirecting part 131. In this way, more light rays can illuminate the first light redirecting part 131 or the second light redirecting part 132, and further illuminate the image sensor. This helps improve light utilization and improve an image shooting effect.

Correspondingly, when the second light redirecting part 132 is opposite to the first lens assembly 11, an optical axis of the first lens assembly 11 may pass through a center of the second light redirecting part 132.

Specifically, the first light redirecting part 131 and the second light redirecting part 132 may be reflectors. Incident light illuminating the reflector through the first lens assembly 11 becomes emergent light after passing through the reflector, and the emergent light illuminates the image sensor. An included angle between the reflector and the optical axis of the lens assembly may be 45°, and directions of the incident light and the emergent light of the reflector are perpendicular to each other. In this way, when the light redirecting assembly 13 and the first lens assembly 11 are distributed in a first direction, and the image sensor and the light redirecting assembly 13 are distributed in a second direction, it is convenient to implement verticality between the first direction and the second direction.

In embodiments of this application, the first light redirecting part 131 or the second light redirecting part 132 moves when driven by a second driving part. The movement may be a straight-line movement, or the movement may be rotation around the first direction z, or the movement may be a movement in another form.

In addition, it should be understood that, when the camera module 10 is in the fourth state, to be specific, the first light redirecting part 131 is opposite to the first lens assembly 11 and the image sensor, if the camera module 10 needs to be in the sixth state, to be specific, the second light redirecting part 132 needs to be opposite to the first lens assembly 11 and the image sensor, the first light redirecting part 131 needs to move. For example, the first light redirecting part 131 moves along the second direction x, so that the first light redirecting part 131 deviates from the first lens assembly 11 or the image sensor. For example, the first light redirecting part 131 deviates from the first lens assembly 11, to leave optical path space for the second light redirecting part 132. The second light redirecting part 132 moves along the second direction x, so that the second light redirecting part 132 is opposite to the first lens assembly 11 and the image sensor. Conversely, when the camera module 10 is in the sixth state, if the camera module 10 needs to be in the fourth state, the first light redirecting part 131 needs to deviate from the first lens assembly 11.

The first light redirecting part 131 and the second light redirecting part 132 may move separately. For example, the second driving assembly 17 may include two or more driving parts (for example, driving motors), and each driving part is correspondingly connected to one light redirecting assembly 13.

Alternatively, the first light redirecting part 131 and the second light redirecting part 132 may move simultaneously, that is, the second driving assembly 17 may be connected to the entire light redirecting assembly 13, so that the second driving assembly 17 can simultaneously drive two or more light redirecting assemblies 13 to move simultaneously. Specifically, for example, the light redirecting assembly 13 may include a support plate. The first light redirecting part 131 and the second light redirecting part 132 are disposed on the support plate. The second driving assembly 17 is connected to the support plate, and drives the support plate to move, to enable the first light redirecting part 131 and the second light redirecting part 132 on the support plate to move.

For example, when the camera module 10 needs to be in the sixth state, the first light redirecting part 131 and the second light redirecting part 132 move along the second direction simultaneously, so that the first light redirecting part 131 deviates from the first lens assembly 11, and the second light redirecting part 132 is opposite to the first lens assembly 11.

The first light redirecting part 131 and the second light redirecting part 132 move simultaneously when driven by the second driving assembly 17. This may reduce occupied space and costs that are required by the second driving assembly 17, to further help reduce a size and costs of the entire camera module 10. In addition, it facilitates engineering implementation and simplifies the structure and control design.

For example, in a possible implementation, the first light redirecting part 131 and the second light redirecting part 132 move along the second direction x when driven by the second driving part.

Specifically, refer to FIG. 17. There may be two image sensors 14, which are respectively a first image sensor 14a and a second image sensor 14b. In the second direction x, the first image sensor 14a and the second image sensor 14b are located on two sides of the light redirecting assembly 13, the first image sensor 14a is opposite to the first light redirecting part 131, and the second image sensor 14b is opposite to the second light redirecting part 132.

The second driving assembly 17 drives the first light redirecting part 131 to move along the second direction x. Refer to FIG. 17. When the first light redirecting part 131 finally moves to a position opposite to the first lens assembly 11 and the first image sensor 14a, the camera module 10 is in the fourth state, and the light ray illuminates the first light redirecting part 131 through the first lens assembly 11, and is redirected by the first light redirecting part 131 to illuminate the first image sensor 14a.

The second driving assembly 17 drives the second light redirecting part 132 to move along the second direction x. Refer to FIG. 18. When the second light redirecting part 132 finally moves to a position opposite to the first lens assembly 11 and the second image sensor 14b, the camera module 10 is in the sixth state, and the light ray illuminates the second light redirecting part 132 through the first lens assembly 11, and is redirected by the second light redirecting part 132 to illuminate the second image sensor 14b.

In this way, switching between the fourth state and the sixth state of the camera module 10 can be implemented, and switching between different focal lengths, that is, between different image shooting functions can be implemented.

A specific structure of the second driving assembly 17 is not limited in this application. The structure of the second driving assembly 17 may be the same as structures of a first driving assembly 16 and a third driving assembly 18, provided that moving requirements of the first light redirecting part 131 and the second light redirecting part 132 can be met.

When the camera module 10 needs to switch from the fourth state to the sixth state, the second driving assembly 17 may drive both the first light redirecting part 131 and the second light redirecting part 132 to move along the second direction x, specifically, for example, move along a +x direction (a direction towards the first image sensor 14a) in FIG. 17, so that the first light redirecting part 131 deviates from the first lens assembly 11, the second light redirecting part 132 is opposite to the first lens assembly 11, and finally, the camera module 10 is in the state shown in FIG. 18.

Correspondingly, when the camera module 10 needs to switch from the sixth state to the fourth state, the second driving assembly 17 drives both the first light redirecting part 131 and the second light redirecting part 132 to move along a -x direction (a direction towards the second image sensor 14b) in FIG. 18, so that the second light redirecting part 132 deviates from the first lens assembly 11, the first light redirecting part 131 is opposite to the first lens assembly 11, and finally, the camera module 10 is in the state shown in FIG. 17.

Still refer to FIG. 17 and FIG. 18. The camera module 10 may further include a second driving controller 171. The second driving controller 171 may be connected to the second driving assembly 17 to control the second driving assembly 17. The second driving controller 171 may be connected to a main controller of an electronic device 100. After receiving a zoom instruction, the main controller may send a work instruction to the second driving controller 171, and the second driving controller 171 may obtain a required movement value, and control the second driving assembly 17 to drive the first light redirecting part 131 and the second light redirecting part 132 to move by a corresponding value.

In addition, the camera module 10 may further include a first driving controller (not shown in the figure). The first driving controller may be connected to the first driving assembly, to control the first driving assembly to drive the second lens assembly to move as required. The first driving controller may also be connected to the main controller.

When the camera module 10 needs to implement switching between different states, when different image shooting functions are used, the main controller may correspondingly control the first driving controller and/or the second driving controller 171 based on the received zoom instruction, so that the camera module 10 is in a corresponding state.

The camera module 10 may further include a third driving controller 181. The third driving controller 181 may be connected to the third driving assembly 18, to control the third driving assembly 18 to drive the first lens assembly 11 to move as required, and implement a focusing function. The third driving controller 181 may also be connected to the main controller.

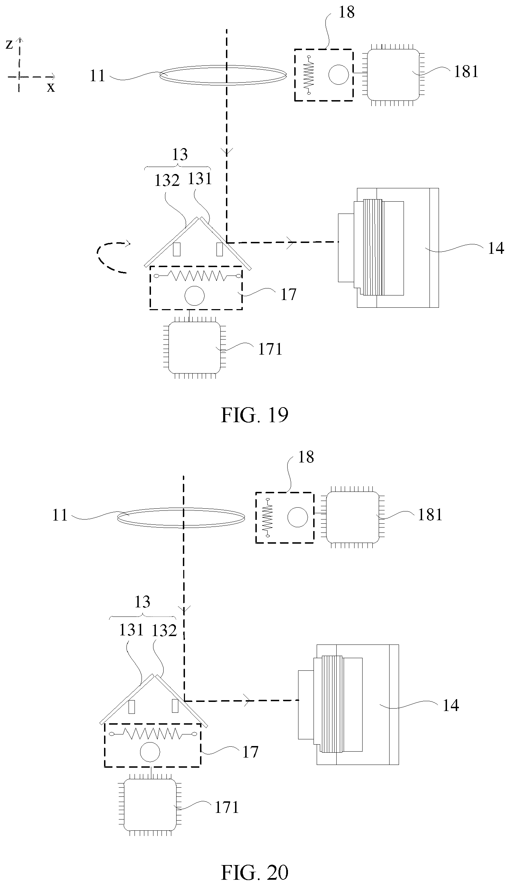

FIG. 19 is a schematic diagram of another system in which a camera module is in a fourth state according to an embodiment of this application. FIG. 20 is a schematic diagram of another system in which a camera module is in a sixth state according to an embodiment of this application.

In another possible implementation, refer to FIG. 19 and FIG. 20. A first light redirecting part 131 and a second light redirecting part 132 may be disposed to rotate around a first direction z. There is one image sensor, and the image sensor 14 and a light redirecting assembly 13 are distributed in a second direction x.

A second driving assembly 17 may drive the first light redirecting part 131 and the second light redirecting part 132 to rotate around the first direction z. Specifically, for example, the first light redirecting part 131 and the second light redirecting part 132 are disposed on a support plate, the support plate is disposed in a rotating manner, and the second driving assembly 17 drives the support plate to rotate, so that the first light redirecting part 131 and the second light redirecting part 132 on the support plate rotate around the first direction z.

Refer to FIG. 19. When the second driving assembly 17 drives the first light redirecting part 131 and the second light redirecting part 132 to rotate, to enable the first light redirecting part 131 to rotate to a position opposite to a first lens assembly 11 and the image sensor 14, the camera module 10 is in the fourth state, and a light ray illuminates the image sensor 14 through the first lens assembly 11 and the first light redirecting part 131.

Refer to FIG. 20. When the second driving assembly 17 drives the first light redirecting part 131 and the second light redirecting part 132 to rotate, to enable the first light redirecting part 131 to deviate from the first lens assembly 11, and the second light redirecting part 132 to be opposite to a first lens assembly 11 and the image sensor 14, the camera module 10 is in the sixth state, and a light ray illuminates the image sensor 14 through the first lens assembly 11 and the second light redirecting part 132.

In this way, the second driving assembly 17 drives the first light redirecting part 131 and the second light redirecting part 132 to rotate around the first direction z, so that the first light redirecting part 131 is opposite to the first lens assembly 11 and the image sensor 14, or the second light redirecting part 132 is opposite to the first lens assembly 11 and the image sensor 14. In other words, switching between the fourth state and the sixth state of the camera module 10 is implemented, and switching between different focal lengths, that is, between different image shooting functions is implemented.

However, in this implementation, the image sensor 14 is disposed on one side of the light redirecting assembly 13, and a requirement of at least two different image shooting functions can be met by using one image sensor 14. This can further simplify a structure of the camera module 10, help reduce occupied space of the camera module 10, and reduce manufacturing costs.

Refer to FIG. 19. For example, when the camera module 10 is in the fourth state, the second driving assembly 17 may drive the first light redirecting part 131 and the second light redirecting part 132 to rotate clockwise as shown by an arrow in the figure, so that the first light redirecting part 131 deviates from the first lens assembly 11, and the second light redirecting part 132 is opposite to the first lens assembly 11. Therefore, switching between the fourth state and the sixth state of the camera module 10 is implemented.

Correspondingly, when the camera module 10 is in the sixth state, the second driving assembly 17 may drive the first light redirecting part 131 and the second light redirecting part 132 to rotate anticlockwise, so that the first light redirecting part 131 deviates from the first lens assembly 11, and the second light redirecting part 132 is opposite to the first lens assembly 11. Therefore, switching between the sixth state and the fourth state of the camera module 10 is implemented.

In embodiments of this application, it should be noted that, unless otherwise specified and limited, the terms "mount", "link", and "connection" should be understood in a broad sense. For example, it may be a fixed connection, or may be an indirect connection through an intermediate medium, or may be an interconnection between two elements or an interaction relationship between two elements. For persons of ordinary skill in the art, specific meanings of the foregoing terms in embodiments of this application may be understood based on a specific situation. The terms such as "first", "second", and "third" in this specification and the accompanying drawings in embodiments of this application are intended to distinguish between similar objects but do not necessarily indicate a specific order or sequence.

In addition, the terms "include" and "have" and any other variants are intended to cover a non-exclusive inclusion. For example, a process, method, system, product, or device that includes a series of steps or units is not necessarily limited to those expressly listed steps or units, but may include other steps or units not expressly listed or inherent to the process, method, product, or device.

Finally, it should be noted that the foregoing embodiments are merely intended for describing the technical solutions in embodiments of this application, instead of limiting the technical solutions. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions in embodiments of this application.

## Claims

1. A camera module, comprising a first lens assembly, a light redirecting assembly, and an image sensor, wherein
a light incidence side of the light redirecting assembly is opposite to the first lens assembly, a light emergence side of the light redirecting assembly is opposite to the image sensor, and the light redirecting assembly is configured to redirect, to illuminate the image sensor, a light ray that enters the camera module through the first lens assembly; and
further comprising at least one second lens assembly and a first driving assembly, wherein the second lens assembly moves to an optical path between the first lens assembly and the image sensor or moves outside the optical path when driven by the first driving assembly.

2. The camera module according to claim 1, wherein the light redirecting assembly and the first lens assembly are distributed in a first direction, and the first direction is parallel to an optical axis of the first lens assembly; and
the image sensor and the light redirecting assembly are distributed in a second direction, and the second direction is perpendicular to the first direction.

3. The camera module according to claim 2, wherein the first lens assembly, the second lens assembly, and the light redirecting assembly are distributed in the first direction, the first driving assembly and the second lens assembly are distributed in the second direction, and the second lens assembly moves to a position between the first lens assembly and the light redirecting assembly when driven by the first driving assembly.

4. The camera module according to claim 3, wherein the first driving assembly comprises a guide rail and a sliding part, the second lens assembly is disposed on the sliding part, the guide rail extends along the second direction, and the sliding part moves along the guide rail.

5. The camera module according to claim 3, wherein the first driving assembly comprises a rotating part, the second lens assembly is disposed on the rotating part, and the rotating part is disposed to rotate around the first direction.

6. The camera module according to claim 2, wherein the second lens assembly, the light redirecting assembly, and the image sensor are distributed in the second direction, the first driving assembly and the second lens assembly are distributed in a third direction, the third direction is perpendicular to both the first direction and the second direction, and the second lens assembly moves to a position between the light redirecting assembly and the image sensor when driven by the first driving assembly.

7. The camera module according to claim 6, wherein the first driving assembly comprises a guide rail and a sliding part, the second lens assembly is disposed on the sliding part, the guide rail extends along the third direction, and the sliding part moves along the guide rail.

8. The camera module according to claim 6, wherein the first driving assembly comprises a rotating part, the second lens assembly is disposed on the rotating part, and the rotating part rotates around the second direction.

9. The camera module according to claim 4 or 7, wherein the first driving assembly further comprises a movement driving part, the movement driving part comprises a driving coil and a magnetic part, the magnetic part is disposed on the sliding part, the driving coil drives the magnetic part to move, and the magnetic part drives the sliding part to move along the guide rail.

10. The camera module according to any one of claims 1 to 9, wherein when the second lens assembly moves to the optical path between the first lens assembly and the image sensor, an optical axis of the second lens assembly overlaps the optical axis of the first lens assembly.

11. The camera module according to any one of claims 1 to 10, wherein the light redirecting assembly comprises a first light redirecting part and a second light redirecting part, wherein curvature of the first light redirecting part is different from curvature of the second light redirecting part; and
the camera module further comprises a second driving assembly, wherein the first light redirecting part moves, when driven by the second driving assembly, to a position opposite to the first lens assembly and the image sensor; or the second light redirecting part moves, when driven by the second driving assembly, to a position opposite to the first lens assembly and the image sensor.

12. The camera module according to claim 11, wherein the image sensor comprises a first image sensor and a second image sensor, the first image sensor, the second image sensor, and the light redirecting assembly are distributed in the second direction, the first image sensor and the second image sensor are located on two sides of the light redirecting assembly, the first image sensor is opposite to the first light redirecting part, and the second image sensor is opposite to the second light redirecting part; and
the first light redirecting part moves along the second direction when driven by the second driving assembly, and the second light redirecting part moves along the second direction when driven by the second driving assembly.

13. The camera module according to claim 11, wherein the first light redirecting part is disposed to rotate around the first direction when driven by the second driving assembly, and the second light redirecting part is disposed to rotate around the first direction when driven by the second driving assembly.

14. The camera module according to any one of claims 11 to 13, wherein when the first light redirecting part is opposite to the first lens assembly, the optical axis of the first lens assembly passes through a center of the first light redirecting part; or
when the second light redirecting part is opposite to the first lens assembly, the optical axis of the first lens assembly passes through a center of the second light redirecting part.

15. The camera module according to any one of claims 11 to 14, wherein the first light redirecting part and the second light redirecting part are reflectors, and an included angle between the reflector and the optical axis of the lens assembly is 45°.

16. The camera module according to any one of claims 1 to 15, further comprising a third driving assembly, wherein the third driving assembly is connected to the first lens assembly, and the first lens assembly moves towards or away from the light redirecting assembly when driven by the third driving assembly.

17. A camera module, comprising a first lens assembly, a light redirecting assembly, and an image sensor, wherein
a light incidence side of the light redirecting assembly is opposite to the first lens assembly, a light emergence side of the light redirecting assembly is opposite to the image sensor, and the light redirecting assembly is configured to redirect, to illuminate the image sensor, a light ray that enters the camera module through the first lens assembly; and
the light redirecting assembly comprises a first light redirecting part and a second light redirecting part, wherein curvature of the first light redirecting part is different from curvature of the second light redirecting part; and
further comprising a second driving assembly, wherein the first light redirecting part moves, when driven by the second driving assembly, to a position opposite to the first lens assembly and the image sensor; or the second light redirecting part moves, when driven by the second driving assembly, to a position opposite to the first lens assembly and the image sensor.

18. The camera module according to claim 17, wherein the image sensor comprises a first image sensor and a second image sensor, the first image sensor, the second image sensor, and the light redirecting assembly are distributed in a second direction, the first image sensor and the second image sensor are located on two sides of the light redirecting assembly, the first image sensor is opposite to the first light redirecting part, the second image sensor is opposite to the second light redirecting part, and the second direction is perpendicular to an optical axis of the first lens assembly; and
the first light redirecting part moves along the second direction when driven by the second driving assembly, and the second light redirecting part moves along the second direction when driven by the second driving assembly.

19. The camera module according to claim 17, wherein the first light redirecting part is disposed to rotate around a first direction when driven by the second driving assembly, the second light redirecting part is disposed to rotate around the first direction when driven by the second driving assembly, and the first direction is parallel to an optical axis of the first lens assembly.

20. The camera module according to any one of claims 17 to 19, wherein when the first light redirecting part is opposite to the first lens assembly, the optical axis of the first lens assembly passes through a center of the first light redirecting part; or
when the second light redirecting part is opposite to the first lens assembly, the optical axis of the first lens assembly passes through a center of the second light redirecting part.

21. The camera module according to any one of claims 17 to 20, wherein the first light redirecting part and the second light redirecting part are reflectors, and an included angle between the reflector and the optical axis of the lens assembly is 45°.

22. An electronic device, at least comprising a housing and the camera module according to any one of claims 1 to 16, or comprising at least a housing and the camera module according to any one of claims 17 to 21, wherein the camera module is disposed on the housing.
